# EUROPEAN PATENT APPLICATION

(11) **EP 2 594 465 A1**
(43) Date of publication of application: **22.05.2013**
(21) Application number: 11189929.0
(22) Date of filing: 21.11.2011
(51) Int. Cl.: B62D 33/06

(54) **Pivotable support system comprising a locking device**

(71) Applicant: Stjernfjädrar AB, 524 21 Herrljunga (SE)
(72) Inventor: Dahlin, Johan, 467 94 Grästorp (SE)
(74) Representative: Lind, Urban Arvid Oskar

(57) **Abstract**

A system for supporting individuals or objects within a vehicle is disclosed. The system comprises: a support structure having an upper support surface; a pivot mechanism making the support structure pivotable between a deployed position, in which the support structure rests against a fixed part of the vehicle, and a lifted position; and a locking device for locking the support structure in the deployed position. The support structure may serve as a bed, and may e.g. be used in a cab of a truck.

The locking device comprises: a latching rod being pivotably mounted to one of said support structure and said fixed part, the latching rod being pivotable around a pivot point with latch arms extending on two opposite sides of said pivot point. Further, at least one locking hook is arranged on the other of said support structure and said fixed part. The locking hook(s) is operable to engage at least one of the latch arms in a locking engagement. A retaining element exerts a force to said latching rod to retain the latch arms in the locked position; and a handle connected to one of said latch arms, to force the latching rod into an unlocked position.

## Description

### Field of the invention

The present invention relates to a system for supporting individuals or objects within a vehicle, as well as a vehicle comprising such a supporting system.

### Background of the invention

In various vehicles, especially in trucks and/or commercial vehicles, there is often a need to provide one or more sleeping area within the vehicle. By way of example, vehicles can often include one or more sleeper bunks or berths upon which one member of a driving team can rest while the other operates the vehicle, or which allows both members of the team to rest when parking the vehicle in a suitable rest area or stop. The cabs of lorries and trucks often include a sleeping area behind the driver and passenger chairs. One or more beds are placed above or alongside each other in the sleeping area. The beds are often arranged in the sleeping area in such a way that they can be folded up against a wall, so that the sleeping area can be used for other purposes, for example for storing freight. Since the sleeping area often has a limited floor surface, it is of utmost importance that the available space is used efficiently.

Further, it is common to provide a storage space beneath the support structure, the storage space being accessible by lifting the support structure. Hereby, the support structure forms a lid to cover the storage space. For safety reasons, it is of great importance that the support structure remains in place even in case of collisions and the like. Further, it is preferred that handling of the support structure can be made with few operative moves, and preferably by the use of only one hand.

Several previous attempts have been made to find locking devices which are easy to operate for the user. For example, such previously know locking devices are disclosed in EP 2 090 459, US 4 978 158 and US 4 138 949. However, all of these locking devices are complicated and costly to produce. Further, the locking devices are relatively complicated and costly to install in the vehicle, and also subsequent repair work becomes complicated and costly. Still further, these known locking devices require much space. The construction of these known locking devices also makes it necessary to use large dimensions for the engageable locking parts, in order to ensure adequate safety.

Thus, while a variety of sleeper bunk or berth devices and systems, and also locking devices to be used therein, are known, there is a continued need for improved devices and systems.

### Summary of the invention

It is therefore an object of the present invention to at least partly overcome these problems, and to provide an improved system for supporting individuals or objects within a vehicle. Specifically, it is an object of the present invention to provide a system for supporting individuals or objects within a vehicle, comprising a pivotable support structure which is lockable, and which takes up little space and which is relatively simple and cost-efficient.

These, and other objects that will be apparent from the following, are achieved by a system for supporting individuals or objects within a vehicle, and a vehicle comprising such a system for supporting individuals or objects, according to the appended claims.

According to a first aspect of the invention there is provided a system for supporting individuals or objects within a vehicle, comprising:
a support structure having an upper support surface;
a pivot mechanism making the support structure pivotable between a deployed position, in which the support structure rests against a fixed part of the vehicle, and a lifted position; and
a locking device for locking the support structure in the deployed position;
wherein said locking device comprises: a latching rod being pivotably mounted to one of said support structure and said fixed part, the latching rod being pivotable around a pivot point with latch arms extending on two opposite sides of said pivot point; at least one locking hook arranged on the other of said support structure and said fixed part, the locking hook(s) being operable to engage at least one of the latch arms in a locking engagement; a retaining element exerting a force to said latching rod to retain the latch arms in the locked position; and a handle connected to one of said latch arms, to force the latching rod into an unlocked position.

Preferably, at least two locking hooks are arranged on the other of said support structure and said fixed part, the locking hooks being operable to engage the latch arms in a locking engagement. However, it is also feasible to provide only one locking hook, arranged to engage only one of the latching arms. Further, it is also feasible to use more than two locking hooks.

By means of the present invention, a relatively simple and cost-efficient locking device is provided. At the same time, the locking device is very robust, providing a reliable and secure locking. Further, the locking hooks, when more than one is used, provide locking engagement at two separated positions, which improves the locking stability even further. In addition, the handle enables a simple unlocking of the locking device, and unlocking can e.g. be made by the use of only one hand.

Further, the locking device takes up very limited space, which improves the overall space utilization in the vehicle, and also makes the locking device easy to integrate. For example, the locking device may be integrated with the support structure and the fixed part in such a way that the locking device becomes more or less invisible during normal use.

In the context of the present application, "support structure" is to be construed broadly, generally indicating any structure forming a curved or flat plane which may function as a support surface. The support structure is preferably rectangular, but may have other shapes as well. Further, the support structure preferably forms a flat, non-curved plane, but slightly curved planes are also feasible. For example, when used as a bed, the support structure may form a curved plane with lower central regions and raised regions along some or all of the sides. Further, the support structure is preferably self-supporting, and preferably comprises at least one layer or frame of rigid material. In case the support structure is intended e.g. to support goods, the support structure may be entirely made of a rigid material, whereas in case the support structure is intended as a bed or bunk, the support structure may additionally comprise a layer of flexible and/or resilient material, such as a mattress. However, the support structure need not be self-supporting, and may comprise only one or several layers of flexible and/or resilient material. For example, the support structure may comprise only a mattress, which in a loaded position is to be supported by additional support means. The additional support means may be fixed and stationary within the vehicle.

The latching rod may be connected to the fixed part beneath the support structure, in which case the locking hook(s) is/are arranged on the support structure. However, preferably, the latching rod is connected to the support structure, to be engaged by locking hooks connected to the fixed part. Since the locking hooks are relatively small, access to the support space provided by the fixed part is hereby not impaired, and the locking device can be integrated in the fixed part and the support structure in such a way that it is hardly visible.

Preferably, the support structure is provided with an opening or a preferably trough-like lowered area, and wherein said latching rod is connected to a locking plate, said plate being connected to the support structure over said opening/lowered area. Hereby, mounting and dismounting of the locking device becomes relatively simple. Further, when the locking plate is arranged over a lowered area, a narrow compartment is formed in the gap between these parts, so that the compartment can accommodate the latching rod etc, thereby to a large extent enclosing the locking device and making it more robust and less visible. By "lowered area" is here meant an area having a lowered upper surface area, i.e. the surface facing away from the underneath fixed part is lowered. The other, lower surface may be correspondingly lowered. However, alternatively, the lower surface may not be lowered, and the lowered upper surface area instead being realized as a variation in thickness of the support structure.

The retaining element is preferably a spring, and most preferably a coil spring. However, other types of retaining element are also feasible, such as elastic cords or the like. Preferably, the retaining element is connected to one of said latch arms, and the handle is connected to the other of said latch arms. Preferably, the retaining element exerts a pulling force on the latching rod, to pull the latch arm(s) into engagement with the locking hook(s). However, the retaining element may also exert a pushing force on the latching rod, to push the latch arm(s) into engagement with the locking hook(s).

The handle is preferably arranged to extend out from the boundaries of the support structure.

The handle is preferably a puling handle, to exert a force on the latching rod upon pulling of the handle. Most preferably, the handle is a strap, such as a strap of a flexible material. However, it is also possible to make the handle a pushing handle, to exert a force on the latching rod upon pushing, or pressing inwards, of the handle. In this case, the handle is preferably of more rigid construction.

The locking device is preferably arranged at or adjacent one side of the supporting structure, and at a location essentially in the middle of said side. Hereby, the robustness of the locking engagement is improved. Preferably, the locking device is arranged at or adjacent one side of the supporting structure, and wherein the locking hooks are separated by a separation distance in the range of 20-80% of the length of said side, and preferably in the range of 30-70% of the length of said side, and most preferably in the range of 40-60% of the length of said side. Hereby, the locking engagement is efficiently distributed over the length of the support structure, providing a very robust locking. Forces exerted on the support structure is hereby taken up more efficiently than e.g. arrangements comprising locking positions only in the centre (i.e. 0% separation), or only at the ends (i.e. 100% separation).

Preferably, the pivot mechanism is arranged at or adjacent one side of the support structure, and the locking device is arranged at or adjacent an opposite side of said support structure.

The support structure preferably comprises a structure base and a mattress supported by said structure base. The mattress may e.g. comprise a resilient material, such as foam rubber or the like. However, preferably the mattress comprises coil springs, and most preferably coil springs arranged in separate pockets of a cover material, a so-called pocket spring mattress.

The support structure is preferably basically rectangular, hence having two long sides and two short sides. Further, the support structure is preferably pivotably connected to a fixed part of the vehicle at one of the long sides of the support structure, so that said long side forms or is adjacent to the pivot axis for pivoting the support structure. However, connection of the support structure to the fixed part at one of the short sides instead would also be feasible.

The support structure may be used in various ways, such as being a shelf or a seat portion of a chair or a couch. However, preferably the support structure is a sleeper bunk. Most preferably, the vehicle is a truck and the sleeper bunk is supported within a cab of the truck. The sleeper bunk is preferably connected to the rear wall of the vehicle cab. The sleeper bunk is preferably arranged in a lower portion of the vehicle cab, and the system may further comprise a further bunk arranged in an upper portion of the vehicle cab, wherein the sleeper bunk in the lower portion of the vehicle cab preferably is arranged below said further bunk.

The support structure is preferably essentially horizontal in the deployed position. The support structure is further preferably essentially vertical in the lifted position. Pivoting between the deployed position and the lifted position preferably results in a rotation over approximately 90 degrees.

According to another aspect of the invention, there is provided a vehicle comprising a system for supporting individuals or objects as defined above.

By means of these additional aspects of the invention, similar objects and advantages as discussed above in relation to the first aspect of the invention are obtainable.

### Brief description of the drawings

These and other aspects of the present invention will now be described in more detail, with reference to the appended drawings showing a currently preferred embodiment of the invention.
Fig. 1 is a schematic partially sectional perspective view of a truck cab illustrating lower and upper sleeper bunks in accordance with an embodiment of the invention, shown in a deployed position.
Fig. 2 is a schematic and partially exploded perspective view of the lower sleeper bunk of Fig. 1 in more detail.
Fig. 3 is a schematic top view illustrating the locking device in a locked position.
Fig. 4 is a schematic top view illustrating the locking device in an unlocked position.

### Detailed description

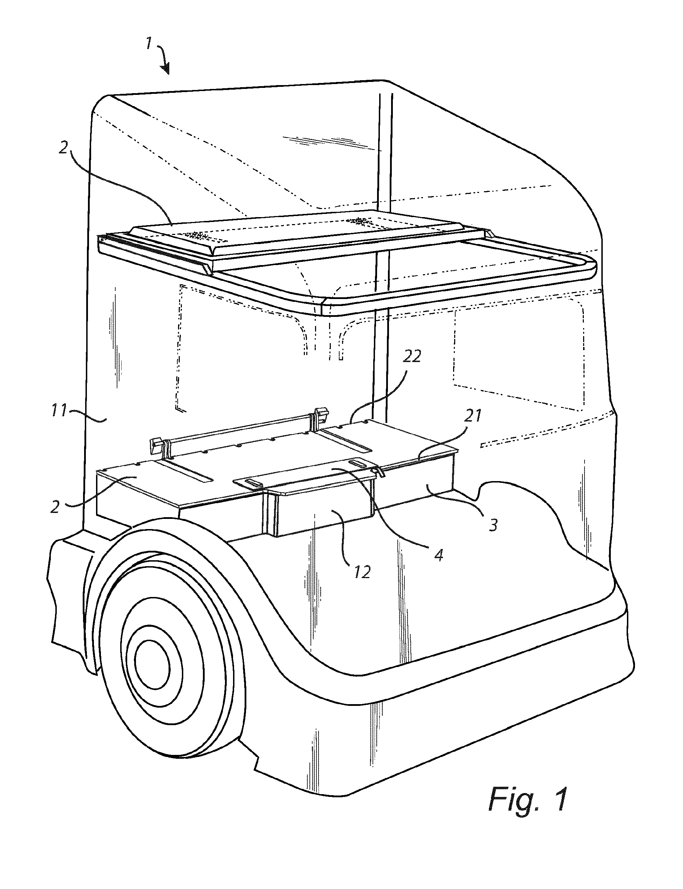

With reference to Figs. 1-4, a system for supporting individuals or objects within a vehicle according to a currently preferred embodiment of the present invention will now be described. This embodiment relates to a support structure in the form of a sleeper bunk arranged in a truck cab. However, as discussed above, the supporting structure may also be used to other ends, such as being used as a shelf for storing cargo and other objects, or being used as a seat or a couch for sitting. Further, the system may also be used in other types of vehicles, such as trains, boats, caravans, trailers, campers, etc. Accordingly, even though the following detailed example is related to a sleeper bunk in a truck cab, it is to be acknowledged by the skilled reader that this is merely intended as a non-limiting example.

With reference to Fig. 1, a truck cab 1 comprises two pivotable support structures 2, which are pivotable between a lowered or deployed position, as illustrated in Fig. 1, and a substantially raised or lifted position (not shown). The support structures here form sleeper bunks, whereby one sleeper bunk is arranged as an upper sleeper bunk, arranged in an upper part of the cab, and one sleeper bunk is arranged as a lower sleeper bunk, arranged in a lower part of the cab. Even though the illustrative example provides two pivotable sleeper bunks, it is naturally also possible to have only one sleeper bunk in the cab, either in an upper or a lower part of the cab, or to provide three or more sleeper bunks, Further, in case several sleeper bunks are provided, not all need to be pivotable. The following detailed description focuses on the arrangements related to one support structure or sleeper bunk, and primarily the lower sleeper bunk, and a locking device for locking the lower sleeper bunk in its lowered resting position. However, the same type of locking device may also be used in further support structures, such as the upper sleeper bunk, in case there is available a fixed part of the truck arranged anywhere below the support structure.

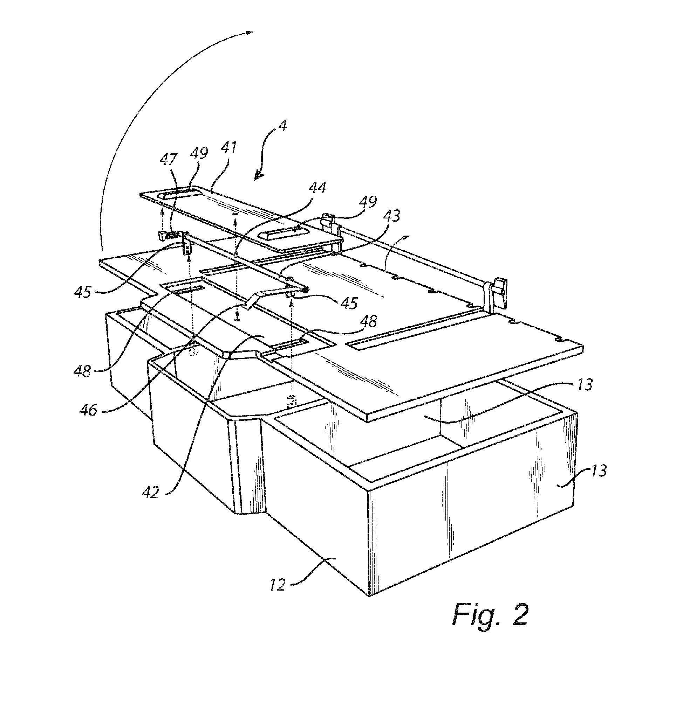

The support structure is pivotably connected to a fixed part of the truck cab, and in the illustrated example to the rear wall 11. Thereby, the pivoting occurs around a pivot line at or proximate a rear side of the bunk so as to be readily pivoted between the raised position and the deployed position. This is illustrated by the curved arrows in Fig. 2. In the deployed position, the support structure is further supported by a fixed part or fixed support structure 3. The fixed support structure here takes the form of an underneath storage compartment, with a vertical front wall 12 essentially in level with the side 21 of the support structure 2 being opposite to the side 22 being pivotably connected to the rear wall 11. The underneath storage compartment may further comprise one or several inner compartment walls 13.

In one embodiment, as illustrated in Fig. 2, the underneath storage compartment forms three separate compartments. The compartments may be accessible only by lifting the support structure, and thus forming the lid of the compartments. However, alternatively or additionally, one or several of the compartments may also be drawers. In the illustrated embodiment, the two side compartments are accessible only from above by lifting the support structure, whereas the centre compartment forms a drawer, which is accessible either from above by lifting the support structure, or by pulling out the drawer.

In the illustrated example, the fixed part 3 supports the entire side edges of the support structure 2. However, other forms of support structures, such as flanges, ridges and the like connected to the side walls of the cab, or posts or the like extending from the floor of the cab, are also feasible.

The support structure or sleeper bunk 2 may take various forms. Preferably, the bunk/structure includes a generally rectangular planar top surface. In the simplest configuration, the support structure is merely a plate. However, preferably the top surface provides a cushioned, resilient, pliant and/or otherwise comfortable surface for an individual to repose or sleep thereon. The length of the bunk is preferably more than 1.8 meters long, preferably longer, and is preferably at least 0.6 meter wide, so as to accommodate most individuals. In some embodiments, the bunk is made with a substantially rectangular frame, such as e.g. a metal frame, which has a semi-flexible fabric material stretched there-around, such as e.g. a canvas material and/or other suitable material, so as to provide a cot-type of bunk. However, preferably the bunk includes a mattress, having common mattress materials, such as e.g. cushioning and/or other materials, along with a suitable base or frame to provide sufficient support and rigidity. The mattress may e.g. comprise a resilient material, such as foam rubber or the like. However, preferably the mattress comprises coil springs, and most preferably coil springs arranged in separate pockets of a cover material, a so-called pocket spring mattress. Any appropriate bunk construction can be employed depending on circumstances as would be appreciated by those in the art based on this disclosure. If a mattress core of sufficient rigidity is used, the mattress may also be used without any frame or base.

A locking device 4 is further provided to lock the support structure in at least the deployed, lowered position.

The locking device 4 comprises a locking plate 41 arranged over a corresponding lowered area 42 of the support structure. The lowered area 42 forms a trough-like area, so that arrangement of the locking plate 41 above it forms a gap between the inner sides of the locking plate and the lowered area. Alternatively, an opening in the support structure may be provided instead of the lowered area. The locking plate 41 may be connected to the support structure in a permanent way, e.g. by welding. However, preferably the locking plate is releasably mounted, e.g. by means of screws or bolts.

Preferably, the locking device is arranged at the end of the support structure being opposite to the side being pivotably connected to the rear wall of the cab. Arranged on the lower side of the locking plate is a latching rod 43. The latching rod is connected to the locking plate by means of a pivot connection 44, making the latching rod pivotable around the pivot connection. Most preferably, the latching rod is arranged on a pin extending between the lowered area 42 and the locking plate 41, and extending through a through hole in the latching rod, whereby the pin forms the pivoting axis for the latching rod.

The latching rod forms a latch arm on two opposite sides of the pivot connection. Preferably, the pivot connection is arranged in about the middle of the latching rod, making the latch arms about equally long. Further, it is preferred that the pivot connection is arranged at about the middle of the support structure.

Locking hooks 45 are further provided on the fixed part, such as on the separating walls 13, and extending to a position to be engageable with the latching rod when the support structure is in the resting position. Thus, the locking hooks are preferably extending up from the support surface formed by the fixed part 12, 13. The locking hooks may e.g. be realized as small plates, bars or the like, having U-shaped openings debouching towards the side, and facing the latching rod. However, other types of locking hooks are feasible, such as curved pins and the like.

Preferably, openings 48, e.g. in the form of narrow elongate slit openings, are provided in the support structure, and in the lowered area 42. Hereby, the locking hooks 45 may extend up through the surface of the lowered area 42 when the support structure is in its deployed position. Further, the gap formed between the locking plate 41 and the lowered area 42 is preferably narrow, and only slightly larger than the thickness of the latching rod 44. In this case, in order to enable the locking hooks to engage the latching rod, raised areas 49 may be formed in the locking plate 41. Preferably, the raised areas 49 are essentially overlaying the openings 48 in the lowered area, and are preferably of about the same shape and dimensions.

Hereby, the locking device is to a large extent hidden in the narrow compartment formed by the locking plate 41 and the lowered area 42. The only visible features of the locking device would be the narrow openings 48, the narrow slightly raised areas 49, the slightly increased dimension, if any, of the support structure in the area of the locking device, the small locking hocks 45 extending from the fixed part, and the handle 46. However, all of these parts are very small, and hardly visible, and also, most of these parts are visible only in some position, such as in the lifted position of the support structure. Accordingly, the locking device is nearly invisible.

One of the latch arms is further provided with a handle 46, to enable the latching rod to be pulled or pushed, thereby pivoting the latching rod to a locked or unlocked position. Preferably, the handle is arranged to enable pulling of the latch arm, thereby pivoting the latching rod to an unlocked position. Further, a retaining element, such as a spring 47, is preferably arranged to provide a force in the opposite direction, thereby forcing the latching rod to a locked position when the handle it not operated. Preferably, the spring is connected to one latch arm, exerting a pulling force on the latch arm, and the handle is connected to the other latch arm, exerting a pulling force on this other latch arm when operated. Thus, when the handle is pulled with a force sufficient to overcome the force exerted by the spring, the latching rod is pivoted to an unlocked position. When the handle is released, or not operated, the spring will force the latching rod is forced to a locked position.

The openings of the locking hooks are preferably arranged to face in the plane of the supporting structure. Preferably one of the locking hooks has an opening facing in the direction of the side of the support structure having the pivotable connection, whereas the other locking hook opening is facing in the opposite direction. Most preferably, the locking hook operable to engage the latch arm to which the handle is connected is facing away from the side of the support structure having the pivotable connection, i.e. is facing in the direction of the pulling force to be exerted on the handle.

The handle is preferably extending out from the boundaries of the support structure, forming a gripping portion which is accessible for the user. The handle may be formed of a rigid material. However, in a preferred embodiment, the handle is formed of a flexible material, and preferably forms a strap.

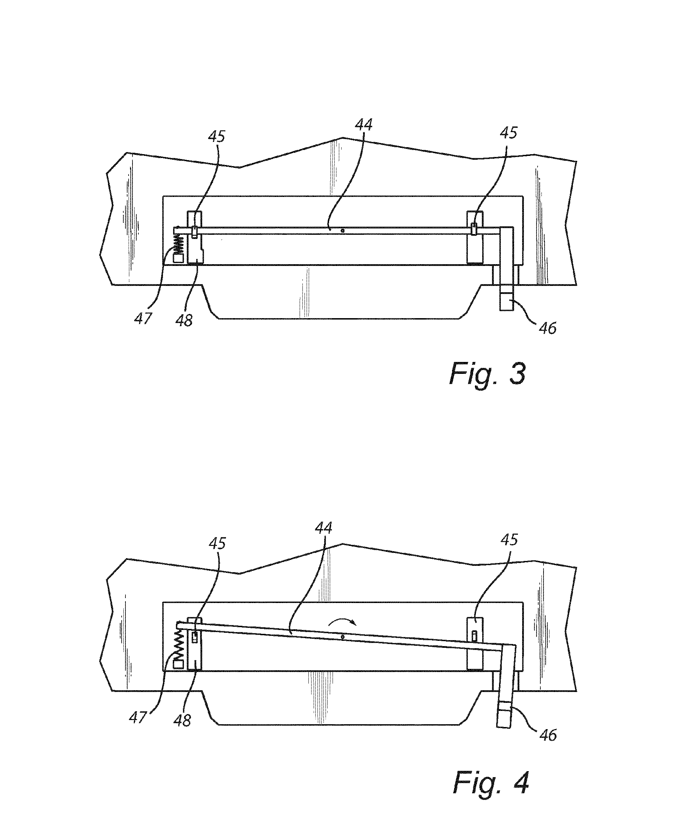

Figs. 3 and 4 illustrate the locking device in two different positions. The figures illustrate the support structure as seen from above, and with the locking plate being removed, for illustrative purposes. Fig. 3 illustrates the latching rod in the locked position, in which the locking hooks 45 extend up through the holes 48 of the lowered area 42, and engage the latch arms of the latching rod 44. The handle 46 is here unbiased, and the spring 47 maintains the latching rod 44 in the locked position. Fig. 4 illustrates the latching rod in the unlocked position, in which the handle 46 has been pulled to disengage the latch arms from the locking hooks 45.

The handle can easily be operated by the use of only one hand, and while simultaneously lifting the support structure. Hereby, the whole operation can easily be accomplished with very few operative moves, and with one hand only. This is of great importance, since it e.g. leaves the other hand free for accessing underneath storage compartments, etc.

Further, the latching rod 44 and/or the locking hooks 45 are preferably shaped in such a way that lowering of the support structure from a lifted position to the deployed position, automatically results in a locked position, where the locking hooks engages the latching rod. This may e.g. be accomplished by having a tapered head on the locking hooks.

In order to facilitate manual positioning of the bunk between raised (or lifted) and lowered (or deployed) positions, one or more handle(s) (not shown) can be provided. The handle(s) can include a hand grip, a recess, an extension, a fabric member, at least one strap(s) and/or the like.

The person skilled in the art realizes that the present invention by no means is limited to the preferred embodiments described above. On the contrary, many modifications and variations are possible within the scope of the appended claims. For instance, the latching rod may be rectangular or circular in cross-section, or having other shapes. Further, the locking hooks may be separated by essentially the entire length of the support structure, or have a very narrow separation, or anything there between. Still further, the fixed part may be an underneath storage compartment, but many other types of fixed parts for holding the locking hooks are feasible. Further, the support structure and optional mattress may be structured and configured in various ways, etc. Also, the system may be used in other applications other than the illustrated truck cab, and for other purposes than sleeping, such as for sitting, or storing goods and other objects.

## Claims

1. A system for supporting individuals or objects within a vehicle, comprising:
a support structure having an upper support surface;
a pivot mechanism making the support structure pivotable between a deployed position, in which the support structure rests against a fixed part of the vehicle, and a lifted position; and
a locking device for locking the support structure in the deployed position;
wherein said locking device comprises: a latching rod being pivotably mounted to one of said support structure and said fixed part, the latching rod being pivotable around a pivot point with latch arms extending on two opposite sides of said pivot point; at least one locking hook arranged on the other of said support structure and said fixed part, the at least one locking hook being operable to engage at least one of the latch arms in a locking engagement; a retaining element exerting a force to said latching rod to retain the latch arms in the locked position; and a handle connected to one of said latch arms, to force the latching rod into an unlocked position.

2. The system of claim 1, wherein the latching rod is connected to the support structure.

3. The system of claim 1 or 2, wherein the support structure is provided with an opening and/or a lowered area, and wherein said latching rod is connected to a locking plate, said plate being connected to the support structure over said opening/lowered area.

4. The system of any one of the preceding claims, wherein the retaining element is a spring.

5. The system of any one of the preceding claims, wherein the retaining element is connected to one of said latch arms, and the handle is connected to the other of said latch arms.

6. The system of any one of the preceding claims, wherein the handle is arranged to extend out from the boundaries of the support structure.

7. The system of any one of the preceding claims, wherein the handle is a puling handle, to exert a force on the latching rod upon pulling of the handle.

8. The system of claim 7, wherein the handle is a strap, and preferably a strap of a flexible material.

9. The system of any one of the preceding claims, wherein the locking device is arranged at or adjacent one side of the supporting structure, and at a location essentially in the middle of said side.

10. The system of any one of the preceding claims, wherein at least two locking hooks are arranged on the other of said support structure and said fixed part, the locking hooks being operable to engage the latch arms in a locking engagement.

11. The system of any one of the preceding claims, wherein the locking device is arranged at or adjacent one side of the supporting structure, and wherein at least two locking hooks are provided, and being separated by a separation distance in the range of 20-80% of the length of said side, and preferably in the range of 30-70% of the length of said side, and most preferably in the range of 40-60% of the length of said side.

12. The system of any one of the preceding claims, wherein the pivot mechanism is arranged at or adjacent one side of the support structure, and the locking device being arranged at or adjacent an opposite side of said support structure.

13. The system of any one of the preceding claims, wherein the support structure comprises a structure base and a mattress supported by said structure base.

14. The system of any one of the preceding claims, wherein said vehicle is a truck and the support structure is a sleeper bunk supported within a cab of the truck.

15. A vehicle comprising a system for supporting individuals or objects according to any one of the preceding claims.
